# EUROPEAN PATENT SPECIFICATION

(11) **EP 0 962 043 B1**
(45) Date of publication and mention of the grant of the patent: **23.11.2005**
(21) Application number: 98905502.5
(22) Date of filing: 20.02.1998
(51) Int. Cl.: H02K 41/02

(54) **APPARATUS FOR PRODUCING LINEAR MOTION**
VORRICHTUNG ZUR HERSTELLUNG LINEARER BEWEGUNGEN
APPAREIL PRODUISANT DES MOUVEMENTS LINEAIRES

(30) Priority: 24.02.1997 GB 9703821; 17.09.1997 GB 9719735
(43) Date of publication of application: 08.12.1999
(73) Proprietor: Advanced Motion Technologies, LLC, Ashton, Maryland 20861 (US)
(72) Inventor: DENNE, Phillip, Raymond, Michael, Bournemouth, Dorset BH2 5LW (GB)
(74) Representative: Bryer, Kenneth Robert
(86) International application number: PCT/GB1998/000495
(87) International publication number: WO 1998/037615

(56) References cited:
- WO-A-93/01646
- US-A- 4 217 507
- US-A- 4 560 894
- US-A- 4 616 153
- US-A- 5 166 563
- US-A- 5 535 853
- PATENT ABSTRACTS OF JAPAN vol. 013, no. 383 (E-811), 24 August 1989 & JP 01 133553 A (CANON INC), 25 May 1989,

## Description

The present invention relates to electromagnetic apparatus for producing linear motion.

One means of producing linear motion directly by electromagnetic means is the linear electric motor devised by Professor Laithwaite of Imperial College, London. This device can be considered as a conventional rotary electric motor in which the stator and armature have been split axially and unrolled. Although the device is very effective, it does have the disadvantage that considerable unbalanced attractive forces exist between the stator and moving armature, so that some means such as a track or wheeled carriage has to be used to maintain a separation between the stator and the armature.

A second form of linear motor has a cylindrical topology like a conventional electric motor but with the magnetic field-producing elements disposed transversely around the longitudinal axis so that the magnetic fields alternate in polarity along the axis of the motor.

Examples of such linear motors are shown in DE-A-229711; EP-A-0221228; US-A-4714300; EP-A-0280743; EP-A-0314493; US-A-4616153; JP-A-01133553 and WO 93/01646.

DE-A-2229711 discloses a dc motor in the form of a piston with a single coil which moves in a cylinder under the action of magnetic fields which are generated by the successive energising of ring-shaped coils spaced axially along the inner surface of the cylinder surrounding the piston.

EP-A-0221228 discloses an arrangement in which both linear and rotary motion of a shaft are produced, the linear motion of the shaft being produced by circumferential coils and the rotary motion by axial peripheral coils in the usual way.

US-A-4414300 discloses a pressure modulator for use in anti-skid brake systems in which a plunger is caused to oscillate longitudinally in a chamber under the influence of a longitudinally-varying magnetic field pattern generated between a winding on the inside of an outer portion of the chamber and a number of magnets disposed around the periphery of the plunger, or vice versa.

EP-A-0280743 discloses a screw for an injection moulding machine which is moved linearly by the interaction between magnets on a shaft forming part of the injection screw and a number of coils surrounding the shaft and to which a three-phase alternating current is applied.

EP-A-0314493 discloses another arrangement in which a shuttle is caused to oscillate in a chamber by the interaction between two magnetic fields, one generated by a winding on the shuttle and the other by a winding forming part of the chamber wall.

US-A-4616153 describes a closed-loop, linear position senco motor having a tubular armature within a tubular stator.

JP-A-01133553 describes a rectilinear-propagation actuator in which a fixed lens tube and a movable lens tube and set up to a relatively movable shape in the axial direction of the lens tubes. A plurality of superconducting coils are arranged at regular intervals in the axial direction. The moveable lens tube has a magnetized annular magnet.

WO 93/01646 discloses another arrangement in which a piston is driven longitudinally in a cylinder by means of the interaction between two radial, magnetic fields, one generated by a series of circumferential coils forming part of the cylinder wall and the other by a plurality of magnets forming part of the piston, or vice versa. For many purposes, the arrangements disclosed in WO 93/01646 are quite satisfactory. However, if the invention ofWO 93/01646 is to be used as a combined fluid/electromagnetic actuator, the need to provide fluid-tight seals both on the piston and where the piston rod emerges through an end wall of the cylinder is a disadvantage, particularly as heavy and off-axis loads will tend to bend the piston rod out of true. Also, the solid construction of the piston and piston rod means that larger sizes of the device will become very heavy.

It is an object of the present invention to provide an improved electromagnetic apparatus for producing linear motion which is lighter in construction and which has increased transverse stiffness.

According to the present invention there is provided an electromagnetic apparatus for producing a controlled axially-directed force comprising two relatively movable members adapted to slide telescopically one within the other, a plurality of annular coils affixed to at least a portion of the axial length of one of the relatively movable members means for producing a plurality of magnetic fluxes, the polarity of which alternates along at least a portion of the other relatively movable member, and means for generating circumferential electric currents in the annular coils in which the said current-generating means includes means for varying either the frequency, the phase or the amplitude of the electric currents in the coils so as to cause the electric currents and magnetic fluxes to interact and to provide a force tending to cause relative motion between the members, characterized in that the two members each have an open end and a closed end and are fitted one within the other to define an enclosed volume between them.

Preferably there is provided at least one seal between the inner surface of the outer tubular member and the outer surface of the inner tubular member so as to prevent the access of harmful environmental components to those parts of the device where relative motion occurs.

The outer ends of the tubular members may include flanges by means of which they can be attached to components of another structure.

The device may be so constructed that the inner tubular member carries an array of permanent magnets and the outer tubular member an assembly of coils which are selectively energised to provide the said variation of one of the magnetic fields, or vice versa. Other arrangements are possible, for example, both tubular members may carry electrical coils, or the permanent magnets may be replaced by low-reluctance magnetic elements or by a conducting sleeve in which a pattern of eddy currents is induced.

Preferably, there are seals interposed between the cup-shaped members so that they form an enclosed space and one of the cup-shaped members has an opening therein so as to enable fluid to pass into and out of the enclosed space.

The device may be constructed as a moving-coil or moving magnet device as desired, but in a preferred arrangement the outer cup-shaped member has an electromagnetic element consisting of a plurality of annular coils separated by ferromagnetic spacers which are arranged to present a constant reluctance to a radially-directed magnetic field originating from a magnetic field-generating element associated with the inner cup-shaped element. Preferably the magnetic-field generating element associated with the inner cup-shaped element is a plurality of permanent magnets.

The invention will now be described, by way of example, with reference to the accompanying drawings, in which;
Figure 1 is a schematic longitudinal section of an electromagnetic apparatus for producing linear motion which is useful for describing the invention;
Figure 2 is a schematic longitudinal section of another apparatus, the description of which can help understand the invention;
Figure 3 is a schematic longitudinal section of the embodiment of the invention; and
Figure 4 is a schematic longitudinal section of a means for producing a variable magnetic field for use in carrying out the present invention.

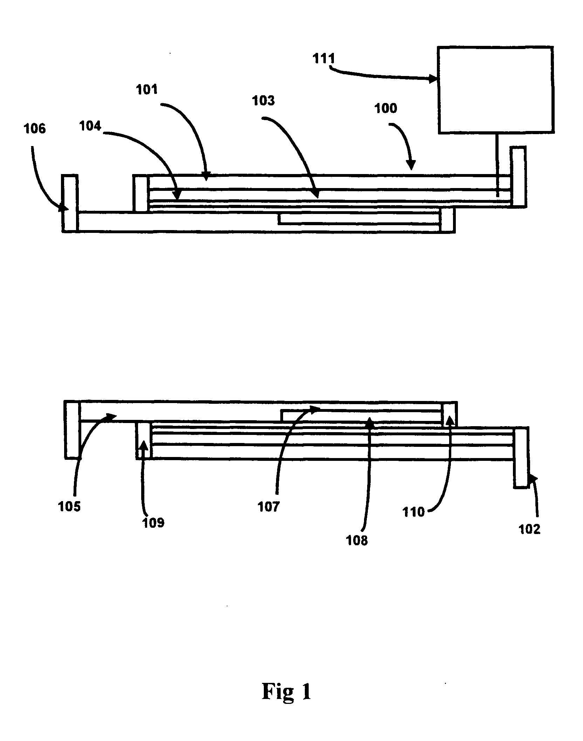

Referring to Figure 1 of the drawings, an apparatus 100 for producing linear motion electromagnetically consists of an outer tubular member 101 which has a mounting flange 102 at one end. Inside the outer tubular member 101 is an axial array of coils 103 which are mounted on a polished steel liner 104. An inner tubular member 105 is arranged to be a good sliding fit in the liner 104 of the outer tubular member 101. The inner tubular member 105 also has a mounting flange 106 at its outer end. A portion 107 of the inner tubular member 105 is provided with a series of annular magnets 108 arranged to produce a magnetic field pattern which alternates in the axial direction and interacts with the magnetic field pattern produced by the coils 103. The outside diameter of the annular magnets 108 is approximately the same as that of the remainder of the inner tubular member 105. A seal 109 is provided where the inner tubular member 105 projects from the outer tubular element 101. A bearing and wiper ring 110 is fitted to the end of the inner tubular member 105 which works inside the outer tubular member 101. The bearing and wiper ring 110 acts to constrain any radial deflection of the inner tubular member 105 and to clean the inner surface of the liner 104 of the outer tubular member 101.

Also included, but not shown in the drawing, is a sensor for determining the position in the outer tubular member 101 of the inner tubular member 105. Signals from this sensor are used to control the action of a power supply 111, which is capable of generating electric currents of variable frequency, phase and amplitude, connected to the array of coils 103, so that the electric currents flowing in the coils 103 produce a magnetic field pattern which interacts with that of the array of magnets 108 on the inner tubular member 105 to produce an axial electromagnetic force of a desired magnitude and direction.

The construction of the device is such that it can withstand considerable transverse loads. Also, the presence of the seal 109 permits the device to be used in hazardous or difficult environments, providing that the open ends of the tubular members 101 and 105 are closed off.

If so desired, the portion of the inner tubular member 105 which projects beyond the outer tubular member 101 when the inner tubular member 105 is at the inner limit of its travel may be of larger or smaller diameter than the remainder. Also, the flanges 102 and 106 may incorporate O-ring seals so that when they are assembled to other structures the volume bounded by the outer faces of the flanges 102 and 106 is sealed. The device may then be adapted to act as a pneumatic spring or actuator as well as providing an electromagnetically-generated linear force.

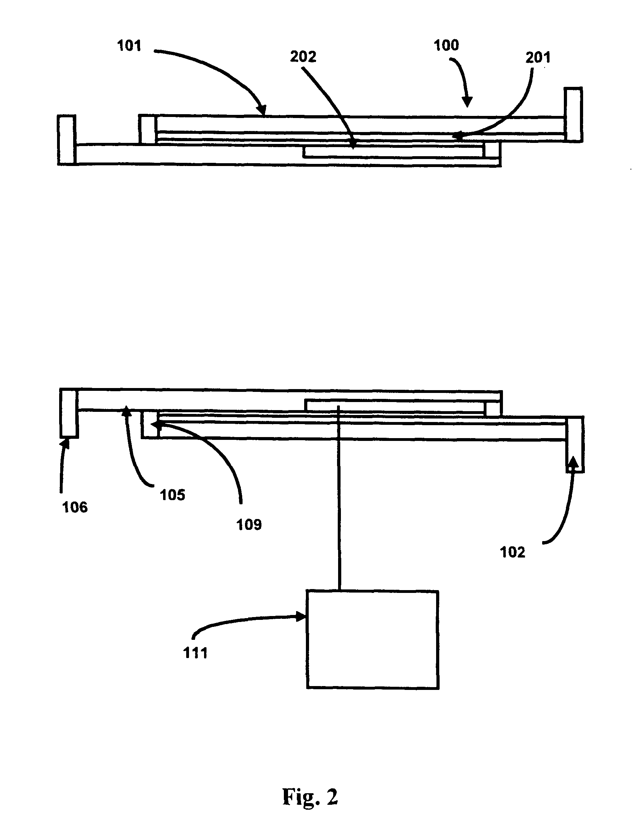

Figure 2 shows another apparatus which is identical to that of Figure 1 except that the liner 104 is replaced by a copper or aluminum tube 201, which may be plated with a hard metal such as chromium so that the tube 201 also acts as the liner 104. Alternatively, a separate liner can be used. Coils 202 in the inner tubular member 105 replace the magnets 108 and generate eddy currents in the copper or aluminium tube 201, which interact with the magnetic field produced by the coils 202. Those components which are common to both embodiments have the same reference numerals.

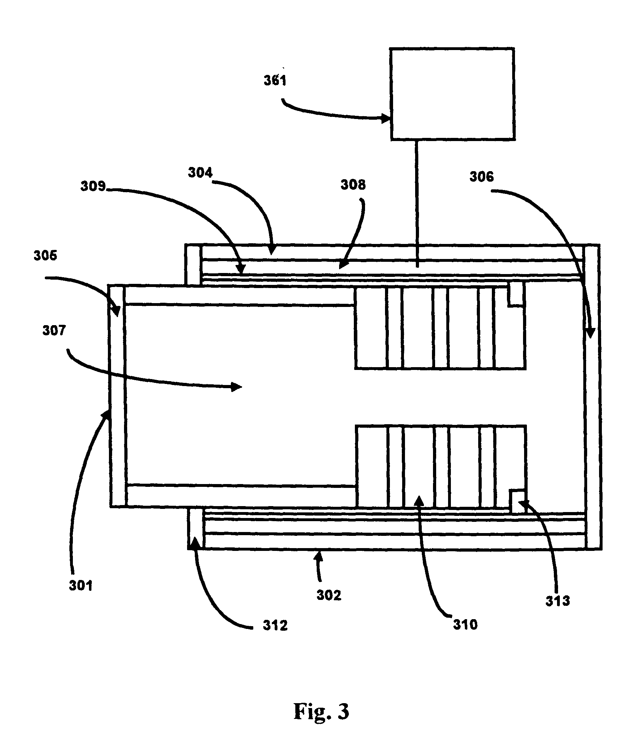

Referring to Figure 3 showing the embodiment of the invention, an apparatus for producing electromagnetically a linearly-acting force consists of two hollow cup-shaped members 301,302 one of which (301) is adapted to move linearly within the other (302). Each of the cup-shaped members 301 and 302 has a tubular section 303, 304, respectively, and end closure members 305 and 306, respectively, positioned at the outer ends of the tubular sections 303 and 304 to form an enclosure 307. As before, an axial array of coils 308 is contained between the tubular section 304 of the cup-shaped member 302 and a polished steel liner 309. At the inner end of the cup-shaped member 301 there is an axially-extending annular array of magnets 310 which produces a magnetic field which alternates axially and interacts with the magnetic field produced by the coils 308 when they are energised by a suitable power supply 361. As before, there is included a sensor for determining the position of the cup-shaped member 301 within the cup-shaped member 302 and producing signals which are used to control the action of the power supply 361, which again is capable of producing electric currents of variable phase, frequency and amplitude, so that the coils 308 produce a magnetic field pattern which interacts with that of the array of magnets 310 on the cup-shaped member 301 to produce an axial electromagnetic force of a desired magnitude and direction.

The cup-shaped member 302 is sealed to the cup-shaped member 301 by a sliding bearing and seal 312 and the inner end of the cup-shaped member is supported by another sliding bearing 313. In this form of the invention there is no need to provide another seal at the inner end of the cup-shaped member 301 because of the end-closures 305 and 30C. As before, considerable lateral stiffness is imparted by the design of the device.

The sealing of the enclosure 307 enables the device to act as a pneumatic spring, because movement of one cup-shaped member relative to the other causes a change in the volume of the enclosure 307, and hence the pressure of a compressible medium in the enclosure 307. If one or other of the, cup-shaped members has a suitable port in it, the device can be connected to an external reservoir and so be enabled to function as a pneumatic or hydraulic ram as well as an electromagnetic linear force producer. If the device is used as an actuator, then such an arrangement would enable a static or slowly-varying load to be accommodated without drawing an electric current from the power supply 361.

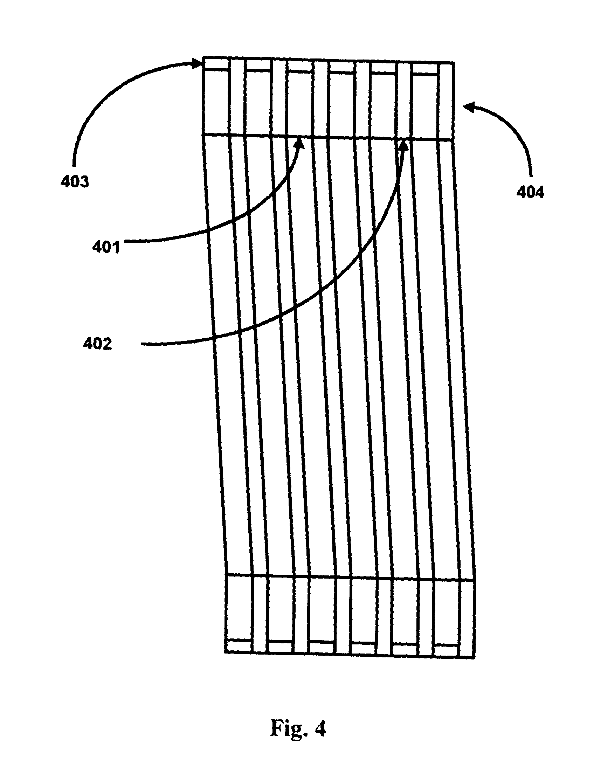

Figure 4 shows an arrangement of coils for use with any of the forms of the invention described above. Referring to Figure 4, the array of magnetic field-producing coils associated with the outer members 102, 302 previously described, is made up from a stack of circular coils 401 which are interposed between rings 402 made of a ferromagnetic material and external ferromagnetic spacer rings 403. The dimensions of the coils 401, rings 402 and spacers 403, are such that the assembly forms a single cylindrical coil assembly 404. In order that the assembly 404 presents a constant reluctance to a radially-directed magnetic field produced by the member moving within the coil assembly 404, each module of the coil assembly 404 is skewed by one coil axial length 401. In other arrangement which is not illustrated, the rings 402 are skewed back and forth over one complete rotation so as to balance any off-axis forces generated by the coil assembly 404.

## Claims

1. Electromagnetic apparatus for producing a controlled axially-directed force comprising two relatively movable members (301, 302) adapted to slide telescopically one within the other, a plurality of annular coils affixed to at least a portion of the axial length of one of the relatively movable members (301, 302), means (310) for producing a plurality of magnetic fluxes, the polarity of which alternates along at least a portion of the other relatively movable member (301, 302), and means (361) for generating circumferential electric currents in the annular coils in which the said current-generating means (361) includes means for varying either the frequency, the phase or the amplitude of the electric currents in the coils so as to cause the electric currents and magnetic fluxes to interact and to provide a force tending to cause relative motion between the members (301, 302), **characterized in that** the two members (301, 302) each have an open end and a closed end (305, 306) and are fitted one within the other to define an enclosed volume between them.

2. Electromagnetic apparatus according to Claim 1, **characterised in that** one of the relatively movable members has a suitable port to allow communication of the said enclosed volume with an external reservoir.

3. Apparatus according to Claim 1 or Claim 2, **characterised in that** the inner tubular member (301) carries an array of permanent magnets (310) and the outer movable member (302) carries an assembly of coils, (308) through which the electric currents are passed by the current generating means (361) to provide the said resultant axial force.

4. Apparatus according to Claim 1 or Claim 2 **characterised in that** the outer movable member (302) carries an array of permanent magnets and the inner movable member (301) carries an assembly of coils through which the electric currents are passed by the controlling means (361) to provide the said resultant axial force.

5. Apparatus according to any preceding claim **characterised in that** the means for producing a plurality of magnetic fluxes comprises an array of axially-magnetised elements with like poles facing and ferromagnetic polepieces interposed.

6. Apparatus according to any preceding claim **characterised in that** the circumferential coils (103, 304) are arranged to be connected as a multi-phase motor winding.

7. Apparatus according to Claim 1 or Claim 2, **characterised in that** the radially-directed magnetic flux is generated by the action of electric currents flowing in annular coils associated with one of the relatively movable members (301, 302) and that there is included a member (201) associated with the other relatively movable member (301, 302) such that eddy currents induced therein by the electric currents flowing in the coils interact with the magnetic flux pattern produced by the currents flowing in the coils so as to produce the axial force.

8. Apparatus according to any preceding claim, **characterised in that** there is included at least one bearing and seal, (311, 312) between the inner surface of the outer movable member (302) and the outer surface of the inner movable member (301) so as to prevent the access of harmful environmental components to those parts of the device where relative motion occurs.

9. Apparatus according to any preceding claim, **characterised in that** the means (111, 311) for varying the circumferential currents is a multi-phase power supply or electronic drive unit, the frequency, phases and amplitudes of the outputs from which can be varied to alter the resultant axial thrust between the movable members.

10. Apparatus according to Claim 8, **characterised in that** the said seal (312) is a fluid-tight seal.

11. Apparatus according to Claim 10, **characterised in that** the space (307) enclosed between the members (301, 302) contains a fluid by which to generate an axial force on the sealed outer ends (305, 306) of the two members (301, 302).

12. Apparatus according to Claim 10 or Claim 11, **characterised in that** the enclosed space within the members (301, 302) is connected to an external fluid reservoir.

13. Apparatus according to any preceding claim **characterised in that** the means (308) for producing the circumferential electric currents comprises a plurality of modules each comprising an annular coil, (401), an external spacer (403) made of a ferromagnetic material and having the same axial length as the coils (401), and a ring (402) made of a ferromagnetic material having the same internal diameter as the coil (401) and the same external diameter as the spacer (403), the rings (402) and coils (401) being so shaped axially as to present a constant reluctance to the radially-directed magnetic flux pattern produced by the magnetic field pattern generating means (108).

14. Apparatus according to Claim 13 **characterised in that** each coil (401) ring (402) spacer (403) module is skewed or is displaced back and forth over one complete rotation a distance equal to the axial length of a coil (401).

15. Apparatus according to Claims 13 or 14 **characterised in that** each ring (402) and spacer (403) are integral, so that the associated coils (401) rest in hollowed spaces within the integral parts.

## Patentansprüche

1. Die Erfindung betrifft eine elektromagnetische Vorrichtung zur Erzeugung einer gesteuerten Axialkraft, bestehend aus zwei relativ-bewegbaren Körpern (301, 302), so ausgelegt, dass sie teleskopisch ineinander zusammenschiebbar sind,
mehreren ringförmigen, an mindestens einem Teil der axialen Länge eines der relativ-bewegbaren Körper (301, 302) befestigten Spulen,
einer Vorrichtung (310) zur Erzeugung mehrerer Magnetflüsse, deren Polarität entlang mindestens eines Teils des anderen relativ-bewegbaren Körpers (301, 302) wechselt, und
einer Vorrichtung (361) zur Erzeugung elektrischer Umfangströme in den ringförmigen Spulen, in denen die stromerzeugende Vorrichtung (306) eine Vorrichtung enthält, um entweder die Frequenz, die Phase oder die Amplitude der elektrischen Ströme in den Spulen so zu variieren, dass die elektrischen Ströme und Magnetflüsse zusammenwirken und eine Kraft erzeugen, die dazu neigt, die Relativbewegung zwischen den Körpern (301, 302) zu bewirken, **dadurch gekennzeichnet, dass**
die beiden Körper (301, 302) jeweils ein offenes und ein geschlossenes Ende (305, 306) aufweisen und so ineinander passen, dass sie gemeinsam ein abgeschlossenes Volumen bilden.

2. Elektromagnetische Vorrichtung nach Anspruch 1, **dadurch gekennzeichnet, dass** einer der relativ-bewegbaren Körper einen geeigneten Port aufweist, um die Kommunikation des abgeschlossenen Volumens mit einem äußeren Reservoir zu ermöglichen.

3. Vorrichtung nach Anspruch 1 oder 2, **dadurch gekennzeichnet, dass** der innere röhrenförmige Körper (301) eine Anordnung von Dauermagneten (310) trägt und der äußere röhrenförmige Körper (302) eine Anordnung von Spulen (308) trägt, durch welche die elektrischen Ströme vom Stromerzeugungsmittel (306) geleitet werden, um die **dadurch** entstehende Axialkraft zu erzeugen.

4. Vorrichtung nach Anspruch 1 oder 2, **dadurch gekennzeichnet, dass** der äußere bewegbare Körper (302) eine Anordnung von Dauermagneten trägt und der innere bewegbare Körper (301) eine Anordnung von Spulen trägt, durch welche die elektrischen Ströme vom Stromerzeugungsmittel (306) geleitet werden, um die entstehende Axialkraft zu erzeugen.

5. Vorrichtung nach einem der vorstehenden Ansprüche, **dadurch gekennzeichnet, dass** die Vorrichtung zur Erzeugung mehrerer Magnetströme eine Anordnung axial magnetisierter Elemente mit gleichnamigen nach innen gerichteten Polen und zwischenständigen ferromagnetischen Polschuhen aufweist.

6. Vorrichtung nach einem der vorstehenden Ansprüche, **dadurch gekennzeichnet, dass** die ringförmigen Spulen (103, 304) so angeordnet sind, dass sie als mehrphasige Motorwicklung verbunden sind.

7. Vorrichtung nach Anspruch 1 oder 2, **dadurch gekennzeichnet, dass** der radialgerichtete Magnetfluss **dadurch** erzeugt wird, dass elektrische Ströme in ringförmigen Spulen fließen, die mit einem der relativ-bewegbaren Körper (301, 302) in Zusammenhang stehen, und dass ein Körper (201) dazu gehört, der mit dem anderen relativ-bewegbaren Körper (301, 302) im Zusammenhang steht, wobei Wirbelströme, die darin von den in den Spulen fließenden elektrischen Strömen bewirkt werden, mit dem von den in den Spulen fließenden Strömen bewirkten magnetischen Flusswechselmuster zusammenwirken, um die Axialkraft zu erzeugen.

8. Vorrichtung nach einem der vorstehenden Ansprüche, **dadurch gekennzeichnet, dass** sie mindestens ein Lager mit Dichtung (311, 312) zwischen der Innenfläche des äußeren bewegbaren Körpers (302) und der Außenfläche des inneren bewegbaren Körpers (301) enthält, um den Einfluss schädlicher Umweltkomponenten auf jene Teile der Vorrichtung zu verhindern, bei denen es zu Relativbewegungen kommt.

9. Vorrichtung nach einem der vorstehenden Ansprüche, **dadurch gekennzeichnet, dass** die Vorrichtung (111, 311) zur Variierung der Umfangströme eine mehrphasige Stromversorgung oder einen elektronischen Antrieb darstellt, an deren Ausgängen die Frequenz, Phasen und Amplitude variiert werden können, um den entstandenen Axialschub zwischen den bewegbaren Körpern zu ändern.

10. Vorrichtung nach Anspruch 8, **dadurch gekennzeichnet, dass** die Dichtung (312) eine flüssigkeitsundurchlässige Dichtung darstellt.

11. Vorrichtung nach Anspruch 10, **dadurch gekennzeichnet, dass** der zwischen den Körpern (301, 302) abgeschlossene Raum (307) eine Flüssigkeit enthält, durch welche an den abgedichteten Außenenden (305, 306) der beiden Körper (301, 302) eine Axialkraft erzeugt wird.

12. Vorrichtung nach Anspruch 10 oder 11, **dadurch gekennzeichnet, dass** der abgeschlossene Raum zwischen den Körpern (301, 302) mit einem äußeren Flüssigkeitsreservoir verbunden ist.

13. Vorrichtung nach einem der vorhergehenden Ansprüche, **dadurch gekennzeichnet, dass** die Vorrichtung (301, 302) zur Erzeugung der elektrischen Umfangsströme mehrere Bauteile umfasst, die jeweils eine ringförmige Spule (401), einen äußeren Abstandhalter (403) aus einem ferromagnetischen Material mit demselben Innenumfang wie die Spule (401) und demselben Außenumfang wie der Abstandhalter (404) aufweisen, wobei die Ringe (402) und Spulen (401) axial so geformt sind, dass sie dem radial gerichteten Magnetflussmuster, das von der das magnetische Feld bildenden Vorrichtung (108) erzeugt wird, einen konstanten Widerstand entgegensetzt.

14. Vorrichtung nach Anspruch 13, **dadurch gekennzeichnet, dass** jedes die Spule (401), den Ring (402) und den Abstandhalter (403) aufweisende Bauteil auf eine der axialen Länge einer Spule (401) entsprechende Distanz um eine volle Umdrehung versetzt oder vorwärts und rückwärts verschoben wird.

15. Vorrichtung nach Anspruch 13 oder 14, **dadurch gekennzeichnet, dass** jeder Ring (402) und Abstandhalter (403) aus einem Stück geformt ist, so dass sich die dazugehörigen Spulen (401) in Hohlräumen innerhalb der integralen Teile befinden.

## Revendications

1. Un appareil électromagnétique pour produire une force contrôlée dirigée axialement, comprenant deux membres déplaçables relativement (301, 302) adaptés pour glisser l'un dans l'autre de manière télescopique, plusieurs bobines annulaires affixées à au moins une portion de la longueur axiale de l'un des membres relativement déplaçables (301, 302), un dispositif (310) pour produire une pluralité de flux magnétiques, la polarité desquels alterne le long d'au moins une portion de l'autre membre relativement déplaçable (301, 302), et un dispositif (361) pour produire des courants électriques circonférentiels dans les bobines annulaires dans lequel ledit dispositif de production de courant (361) comprend un dispositif pour modifier soit la fréquence, soit la phase, soit l'amplitude des courants électriques dans les bobines de façon à causer l'interaction des courants électriques et des flux magnétiques et à fournir une force tendant à causer un mouvement relatif entre les membres (301, 302), **caractérisé en ce que** les deux membres (301, 302) possèdent chacun une extrémité ouverte et une extrémité fermée (305, 306) et sont montés l'un dans l'autre pour définir un volume confiné entre eux.

2. Un appareil électromagnétique selon la revendication 1, **caractérisé en ce que** l'un des membres relativement déplaçables possède un orifice pour permettre la communication dudit volume confiné avec un réservoir externe.

3. Un appareil électromagnétique selon la revendication 1 ou la revendication 2, **caractérisé en ce que** le membre tubulaire intérieur (301) porte un réseau d'aimants permanents (310) et le membre déplaçable extérieur (302) porte un assemblage de bobines (308), à travers lesquelles les courants électriques sont passés par le dispositif de production de courant (361) pour fournir ladite force linéaire ou axiale résultante.

4. Un appareil électromagnétique selon la revendication 1 ou la revendication 2, **caractérisé en ce que** le membre tubulaire extérieur (302) porte un réseau d'aimants permanents et le membre déplaçable intérieur (302) porte un assemblage de bobines (308), à travers lesquelles les courants électriques sont passés par le dispositif de commande (361) pour fournir ladite force linéaire résultante.

5. Un appareil selon l'une quelconque des revendications précédentes, **caractérisé en ce que** le dispositif pour produire plusieurs flux magnétiques comprend un réseau d'éléments magnétisés linéairement ou axialement avec des pôles équivalents se faisant face et des composants de pôles ferromagnétiques interposés.

6. Un appareil selon l'une quelconque des revendications précédentes, **caractérisé en ce que** les bobines circonférentielles (103, 304) sont configurées pour être connectées comme un bobinage de moteur à phases multiples.

7. Un appareil sur la revendication 1 ou la revendication 2, **caractérisé en ce que** le flux magnétique dirigé radialement est produit par l'action de courants électriques s'écoulant dans des bobines annulaires associées avec l'un des membres déplaçables relativement (301, 302) et **en ce qu'**un membre (201) est inclus qui est associé avec l'autre membre relativement déplaçable (301, 302), de manière à ce que les courants de Foucault induits dans le membre par les courants électriques s'écoulant dans les bobines interagissent avec le profil du flux magnétique produit par les courants s'écoulant dans les bobines, afin de produire la force linéaire ou axiale.

8. Un appareil selon l'une quelconque des revendications précédentes, **caractérisé en ce qu'**au moins une bague et un joint (311,312) sont inclus entre la surface intérieure du membre déplaçable extérieur (302) et la surface extérieure du membre déplaçable intérieur (301), afin d'empêcher l'accès par des composants environnementaux néfastes aux pièces de l'appareil où le mouvement relatif prend place.

9. Un appareil selon l'une quelconque des revendications précédentes, **caractérisé en ce que** le dispositif (111, 311) pour modifier les courants circonférentiels est une source de courant à phases multiples ou une unité d'entraînement électronique, dont la fréquence, les phases et les amplitudes des sorties peuvent être modifiées pour altérer la poussée linéaire résultant entre les membres déplaçables.

10. Un appareil selon la revendication 8, **caractérisé en ce que** le joint (312) est un joint étanche.

11. Un appareil selon la revendication 10, **caractérisé en ce que** l'espace (307) confiné entre les membres (301, 302) contient un liquide au moyen duquel la force linéaire est exercée sur les extrémités extérieures étanches (305, 306) des deux membres (301, 302).

12. Un appareil selon la revendication 10 ou la revendication 11, **caractérisé en ce que** l'espace confiné entre les membres (301, 302) est couplé avec un réservoir de liquide extérieur.

13. Un appareil selon l'une quelconque des revendications précédentes, **caractérisé en ce que** le dispositif (308) pour produire les courants électriques circonférentiels comprend plusieurs modules, chacun comprenant une bobine annulaire (401), une bague d'espacement externe (403) dans un matériau ferromagnétique possédant la même longueur axiale que les bobines (401), et un anneau (402) dans un matériau ferromagnétique possédant le même diamètre interne que la bobine (401) et le même diamètre externe que la bague d'espacement (403), les anneaux (402) et les bobines (401) possédant une forme axiale telle qu'ils présentent une réluctance constante au profil du flux magnétique radialement dirigé, produit par le dispositif de production (108) de profil de champ magnétique.

14. Un appareil selon la revendication 13, **caractérisé en ce que** chaque module bobine (401) - anneau (402) - bague d'espacement (403) est oblique ou déplacé d'avant en arrière, selon une rotation complète sur une distance égale à la longueur axiale d'une bobine (401).

15. Un appareil selon les revendications 13 ou 14, **caractérisé en ce que** chaque anneau (402) et bague d'espacement (403) sont intégrés, de manière à ce que les bobines (401) associées reposent dans des espaces creusés à l'intérieur des pièces intégrées.
